# EUROPÄISCHE PATENTSCHRIFT

(11) **EP 3 322 912 B1**
(45) Veröffentlichungstag und Bekanntmachung des Hinweises auf die Patenterteilung: **11.09.2019**
(21) Anmeldenummer: 16738140.9
(22) Anmeldetag: 11.07.2016
(51) Int. Cl.: B60G 13/08, F16F 9/36, F16F 9/38, F16F 9/06, F16F 9/19, F16F 9/32

(54) **SCHWINGUNGSDÄMPFER**
VIBRATION DAMPER
AMORTISSEUR DE VIBRATIONS

(30) Priorität: 16.07.2015 DE 102015111538
(43) Veröffentlichungstag der Anmeldung: 23.05.2018
(73) Patentinhaber: ThyssenKrupp Bilstein GmbH, 58256 Ennepetal (DE); thyssenkrupp AG, 45143 Essen (DE)
(72) Erfinder: MUNTEANU, Virgil, 550225 Sibiu (RO); REIMANN, Thilo, 58256 Ennepetal (DE)
(74) Vertreter: thyssenkrupp Intellectual Property GmbH
(86) Internationale Anmeldenummer: PCT/EP2016/066434
(87) Internationale Veröffentlichungsnummer: WO 2017/009287

(56) Entgegenhaltungen:
- DE-A1- 19 506 479
- DE-A1- 19 516 383
- DE-C1- 10 023 648

## Beschreibung

Die vorliegende Erfindung betrifft einen Schwingungsdämpfer, insbesondere für ein Fahrwerk eines Fahrzeugs, mit einem Dämpferrohr und mit einem Arbeitskolben, der über eine Innenseite des Dämpferrohres in einer Längsachse geführt ist, und wobei auf einer Außenseite des Dämpferrohres eine Verstärkungshülse angeordnet ist, auf der eine Aufnahmegabel zur Fahrwerksanbindung anordbar ist, und wobei die Verstärkungshülse in Längsachsenrichtung mit einem umlaufenden Rand begrenzt ist.

### STAND DER TECHNIK

Aus der DE 100 23 648 C1 ist ein Federbein mit topfförmigen Anschlussteil bekannt.

Bekannt sind Anordnungen von Verstärkungshülsen auf der Außenseite von Dämpferrohren, um eine mechanische Verstärkung zur Aufnahme einer Aufnahmegabel zu schaffen. Die Wandung eines Dämpferrohres ist aufgrund der begrenzten Wandstärke nicht grundsätzlich hinreichend mechanisch belastbar, um unmittelbar auf der Außenseite des Dämpferrohres die Aufnahmegabel anzuordnen, sodass eine Verstärkungshülse zur mechanischen Verstärkung auf das Dämpferrohr vorgesehen ist. Weiterhin weist die Verstärkungshülse auf an sich bekannte Weise eine Wulst, eine Ringbeule oder dergleichen auf, um die Aufnahmegabel in Längsachsenrichtung gegen die Verstärkungshülse abzustützen.

Die Aufnahmegabel dient zur Fahrwerksanbindung und steht beispielsweise mit einem Achsschenkel in Verbindung. Aufgrund der erhöhten eingeleiteten Kräfte dient die Verstärkungshülse zur Aussteifung des unteren Endes des Dämpferrohres, wobei häufig das Problem entsteht, dass aufgrund des gebildeten Spaltes zwischen der Innenseite der Verstärkungshülse und der Außenseite des Dämpferrohres Spaltkorrosion auftritt. In der Regel wird daher der die Verstärkungshülse in Längsachsenrichtung axial begrenzende umlaufende Rand mit der Außenseite des Dämpferrohres verschweißt, beispielsweise mit Laserstrahlung. Jedoch ergeben sich aufgrund der Wärmeeinwirkung durch das Schweißverfahren auf das Dämpferrohr Nachteile, insbesondere wenn der Arbeitskolben unmittelbar über die Innenseite des Dämpferrohres geführt ist. Dabei muss festgestellt werden, dass auch bei Schweißverfahren mit minimaler Wärmeeinbringung, beispielsweise unter Verwendung von Laserstrahlung, die Wärmeeinwirkung auf das Dämpferrohr dennoch derart groß ist, dass ein dauerhafter Betrieb des Schwingungsdämpfers möglicherweise gestört wird. Insbesondere wenn es zu einem Wärmeverzug oder zu einer Gefügebeeinflussung kommt. Auch wenn es lediglich zu einer Oberflächenbeeinträchtigung der Innenseite des Dämpferrohres kommt, kann ein langfristiger, dauerhafter Betrieb des Schwingungsdämpfers nicht mehr gewährleistet werden.

Ziel einer Laserverschweißung ist dabei nicht nur eine stoffschlüssige Verbindung der Verstärkungshülse mit dem Dämpferrohr, sondern auch ein hermetisch dichter Abschluss des umlaufenden Randes, sodass eine Spaltkorrosion vermieden wird. Aufgrund der Nachteile bei der Anwendung eines Schweißverfahrens ist es daher wünschenswert, eine Alternative zur Vermeidung der Spaltkorrosion anzugeben, insbesondere ohne Verwendung eines Schweißverfahrens.

### OFFENBARUNG DER ERFINDUNG

Aufgabe der Erfindung ist, einen Schwingungsdämpfer mit einem Dämpferrohr und mit einer auf wenigstens einem Teilabschnitt des Dämpferrohres angeordneten Verstärkungshülse derart zu verbessern, dass Spaltkorrosion zwischen der Verstärkungshülse und dem Dämpferrohr vermieden wird. Insbesondere soll die Verstärkungshülse unter Ausschluss eines Schweißverfahrens auf dem Dämpferrohr angeordnet. Eine besondere Aufgabe der Erfindung ist dabei die hermetische Abdichtung des Spaltes zwischen dem Dämpferrohr und der Verstärkungshülse.

Diese Aufgabe wird ausgehend von einem Schwingungsdämpfer gemäß dem Oberbegriff des Anspruches 1 und ausgehend von einem Verfahren gemäß dem Oberbegriff des Anspruches 8 mit den jeweils kennzeichnenden Merkmalen gelöst.

Vorteilhafte Weiterbildungen der Erfindung sind in den abhängigen Ansprüchen angegeben.

Die Erfindung schließt die technische Lehre ein, dass im Bereich des umlaufenden Randes ein die Außenseite des Dämpferrohres umschließendes Dichtelement in der Verstärkungshülse aufgenommen ist, wobei der umlaufende Rand einen plastisch verformten Umformabschnitt aufweist, der das Dichtelement umgreift.

Die Erfindung geht von dem Gedanken aus, ein Dichtelement am Ende der Verstärkungshülse anzuwenden, um das Eindringen von Feuchtigkeit und Verunreinigungen in den Spalt zwischen Dämpferrohr und Verstärkungshülse zu verhindern, und damit die Bildung von Spaltkorrosion zu vermeiden. Insbesondere entsteht der Vorteil, dass der Einsatz von Schweißverfahren oder sonstigen stoffschlüssigen Verfahren verhindert wird. Um das Dichtelement wirkungsvoll im Bereich des umlaufenden Randes der Verstärkungshülse aufzunehmen, schlägt die Erfindung einen plastisch verformten Umformabschnitt vor, wobei das Dichtelement vor dem Umformen des Umformabschnittes in eine Nut einsetztbar ist, die innenseitig im umlaufenden Rand ausgebildet ist und die zur Endseite der Verstärkungshülse hin offen ausgebildet ist. Durch die Umformung des Umformabschnittes wird erreicht, dass das Dichtelement zwischen der Innenseite der Verstärkungshülse und der Außenseite des Dämpferrohres im Wesentlichen vollständig eingefasst wird.

Durch den Umformschritt wird dabei der Umformabschnitt so umgeformt, dass ein im Wesentlichen spaltfreier Abschluss des umlaufenden Randes gegen die Außenseite des Dämpferrohres erzielt wird. Feuchtigkeit kann folglich nicht mehr in den Spalt eindringen, was hauptsächlich und insbesondere zusätzlich durch die Anordnung des Dichtelementes in oder unterhalb des Umformabschnittes erzielt wird.

Gemäß einer vorteilhaften Weiterführung der erfindungsgemäßen Ausgestaltung zur Anordnung der Verstärkungshülse auf dem Dämpferrohr ist der Umformabschnitt derart umgeformt, dass das Ende des Umformabschnittes an der Außenseite des Dämpferrohres anliegend ausgebildet ist. Besonders bevorzugt weist zur Aufnahme des Dichtelementes der umlaufende Rand eine Nut auf, wobei die Nut in der Innenseite des umlaufenden Randes der Verstärkungshülse eingebracht ist. Die Nut weist mit weiterem Vorteil im Querschnitt eine L-Form auf, sodass die Nut zur einen Seite hin, nämlich zum Ende der Verstärkungshülse, offen ausgeführt ist. Dadurch wird zudem der Vorteil erreicht, dass die Verstärkungshülse auf das Dämpferrohr aufschiebbar ist, und erst anschließend wird das Dichtelement in der Nut angeordnet. Das Dichtelement wird dabei von dem noch nicht umgeformten Umformabschnitt überragt und wird der Umformschritt ausgeführt, quetscht der Umformabschnitt das Dichtelement zwischen dem Umformabschnitt und der Außenseite des Dämpferrohres ein. Bei diesem Vorgang wird auch die Form der Nut verändert, und die Nut ist nach Abschluss des Umformvorganges beidseitig geschlossen.

Die Nut begrenzt dabei den Umformabschnitt mit Vorteil nach innen zum Dämpferrohr hin und ist beispielsweise derart dimensioniert, dass das Dichtelement die Nut nach dem Umformen des Umformabschnittes vollständig ausfüllt. Insbesondere dann, wenn kein Hohlraum mehr unterhalb des Umformabschnittes vorhanden ist, wird der besondere Vorteil erreicht, dass auch keine Feuchtigkeit zwischen dem Umformabschnitt im umlaufenden Rand der Verstärkungshülse und der Außenseite des Dämpferrohres angesammelt werden kann. Besonders dadurch wird die Bildung von Spaltkorrosion wirkungsvoll vermieden.

Ein vorteilhaftes Ausführungsbeispiel des Schwingungsdämpfers sieht vor, dass das Dichtelement durch einen O-Ring gebildet ist. Der O-Ring ist mit Vorteil an der Außenseite des Dämpferrohres angepasst, auch ist es denkbar, dass der O-Ring eine Schnurdicke aufweist, die an die Dimension der Nut unterhalb des Umformabschnittes angepasst ist. Dabei sollte der O-Ring so dimensioniert sein, dass dieser an den verbleibenden Raum unterhalb des Umformabschnittes angepasst ist, wenn der Umformvorgang zur Umformung des Umformabschnittes abgeschlossen ist. Eine leichte Quetschung des Dichtelementes wäre dabei vorteilhaft, sodass die Schnurdicke des O-Ringes leicht überdimensioniert gewählt wird. Nur so wird erreicht, dass der O-Ring die Nut nach dem Umformvorgang vollständig ausfüllt.

Beispielsweise weist der Umformabschnitt eine radiale Dicke von 10 % bis 50 % der Wandstärke der Verstärkungshülse auf, und/oder der Umformabschnitt weist eine radiale Dicke von 0,5 mm bis 1,5 mm auf. Ist die Nut mit Vorteil im Endbereich der Verstärkungshülse innenseitig eingebracht, so ergibt sich eine Querschnittsform der Verstärkungshülse im Bereich des umlaufenden Randes, durch die der umlaufende Rand von der Innenseite verjüngt ist, und der verjüngte restliche Abschnitt der Verstärkungshülse bildet den Umformabschnitt. Dadurch wird auch der Vorteil erreicht, dass die sich einstellenden Umformkräfte zur Umformung des Umformabschnittes geringer ausfallen, sodass das Anrollieren des Umformabschnittes an die Außenseite des Dämpferrohres mit geringeren Kräften ausgeführt wird. Die Kräfte werden vorteilhafterweise so gering gehalten, dass eine Verformung des Dämpferrohres durch die Einwirkung des Umformwerkzeuges ausgeschlossen werden kann. Als Drückwerkzeug findet insbesondere ein Rollierwerkzeug oder ein sonstiges Verformungswerkzeug Anwendung, wobei insbesondere der Umformabschnitt rotationssymmetrisch um die Längsachse umgeformt wird, und die Umformung erfolgt vollumfänglich über den gesamten umlaufenden Rand der Verstärkungshülse. Nur so kann das Eindringen von Feuchtigkeit in den Spalt zwischen der Verstärkungshülse und dem Dämpferrohr vermieden werden.

### BEVORZUGTES AUSFÜHRUNGSBEISPIEL

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine quergeschnittene Ansicht eines Schwingungsdämpfers im Bereich der unteren Anbindung mit einer Aufnahmegabel, wobei der Umformabschnitt des umlaufenden Randes noch nicht umgeformt ist,
- Figur 2: die quergeschnittene Darstellung des Schwingungsdämpfers gemäß Figur 1, wobei mit einem Rollierwerkzeug der Umformabschnitt des umlaufenden Randes umgeformt wurde,
- Figur 3: eine vergrößerte Ansicht des umlaufenden Randes an der Endseite der Verstärkungshülse, die angeordnet ist auf dem Dämpferrohr und
- Figur 4: eine weitere perspektivische Ansicht des Schwingungsdämpfers mit einem erfindungsgemäß ausgestalteten umlaufenden Rand.

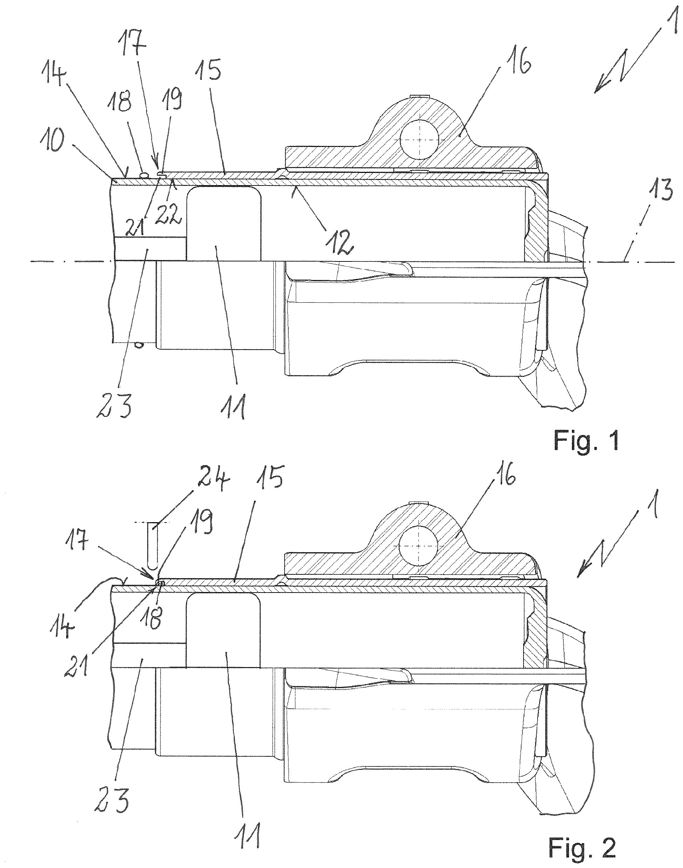

Die Figuren 1 und 2 zeigen in einer zur Hälfte quergeschnittenen Ansicht den unteren Teil eines Schwingungsdämpfers 1, der den Teil bildet, der an das Rad eines Fahrzeuges angebunden wird. Der Schwingungsdämpfer 1 weist ein Dämpferrohr 10 auf, in dem ein Arbeitskolben 11 entlang einer Längsachse 13 geführt ist. Zur Führung des Arbeitskolbens 11 dient die Innenseite 12 des Dämpferrohres 10. Durch die Führungsaufgabe der Innenseite 12 ist es erforderlich, dass diese beschädigungsfrei ist, insbesondere hinsichtlich der Maßgenauigkeit und hinsichtlich der Oberflächenqualität. Der Arbeitskolben 11 ist mit einer Kolbenstange 23 verbunden, und die Kolbenstange 23 dient zur Anbindung an den Fahrzeugaufbau.

Um eine Anbindung des Schwingungsdämpfers 1 an das Rad des Fahrzeuges herzustellen, dient neben weiteren Bauteilen eine Aufnahmegabel 16, die an das untere Ende des Schwingungsdämpfers 1 angebunden wird und die beispielsweise mit einem Achsschenkel verbunden wird. Die Aufnahmegabel 16 sitzt auf einer Verstärkungshülse 15 auf, die in Längsachsenrichtung kürzer ausgebildet ist als das Dämpferrohr 10, und die Verstärkungshülse 15 schließt mit einem umlaufenden Rand 17 ab, aus dem heraus sich der weitere Teil des Dämpferrohres 10 erstreckt. Aufgrund des sich bildenden Spaltes zwischen der Außenseite 14 des Dämpferrohres 10 und der Innenseite 22 der Verstärkungshülse 15 ergibt sich der Nachteil, dass sich gegebenenfalls Spaltkorrosion bildet, und die nachfolgend beschriebene erfindungsgemäße Ausgestaltung der Anbindung der Verstärkungshülse 15 an das Dämpferrohr 10 zeigt eine Möglichkeit auf, Spaltkorrosion zu vermeiden.

Der umlaufende Rand 17 weist einen Umformabschnitt 19 auf, der dadurch gebildet ist, dass innenliegend im Umformabschnitt 19 eine Nut 21 eingebracht ist. Dadurch entsteht unterhalb des Umformabschnittes 19, in Richtung zur Außenseite 14 des Dämpferrohres 10 weisend, ein Ringspalt, und in den Ringspalt ist ein Dichtelement 18 einsetzbar, das in Figur 1 beabstandet zur Nut 21 gezeigt ist und das in Figur 2 in der Nut 21 aufgenommen gezeigt ist. Die Abdichtung des umlaufenden Randes 17 gegen die Außenseite 14 des Dämpferrohres 10 sieht damit die Anordnung eines Dichtelementes 18 vor, und das Dichtelement 18 ist als O-Ring ausgeführt.

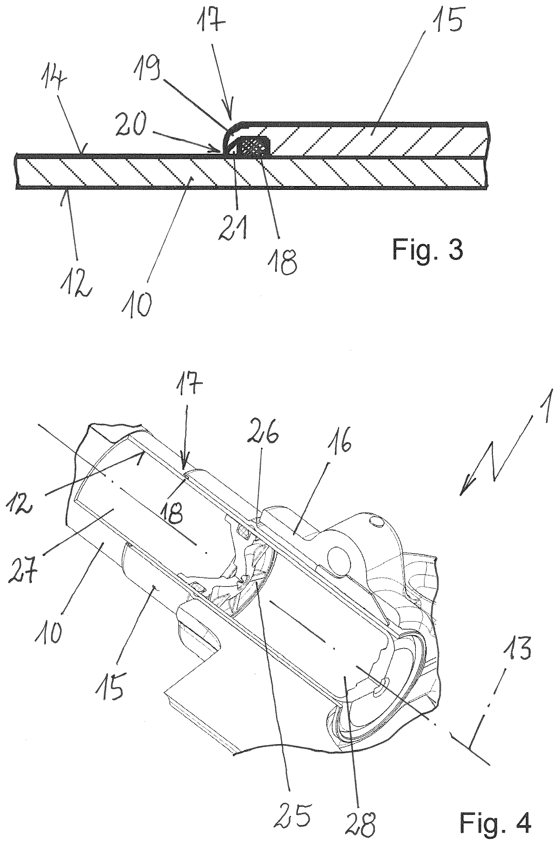

Figur 2 stellt schematisch ein Rollierwerkzeug 24 dar, und nach Anordnung des Dichtelementes 18 in der Nut 21 wird das Rollierwerkzeug 24 in Kontakt mit dem Umformabschnitt 19 gebracht, und der Umformabschnitt 19 wird derart umgeformt, dass das Ende des Umformabschnittes 19 in Richtung zur Außenseite 14 des Dämpferrohres 10 umgeformt wird. Durch die sich einstellende plastische Verformung verbleibt das Dichtelement 18 eingeschlossen in der Nut 21, wobei die Umformung des Umformabschnittes 19 mit dem Rollierwerkzeug 24 derart erfolgt, dass das Ende des Umformabschnittes 19 an die Außenseite 14 des Dämpferrohres 10 angrenzt, wie in Figur 3 vergrößert gezeigt.

Figur 3 stellt in einer vergrößerten Ansicht den umlaufenden Rand 17 endseitig an der Verstärkungshülse 15 dar, die auf dem Dämpferrohr 10 aufsitzt. Die Ansicht zeigt einen bereits umgeformten Umformabschnitt 19, sodass das Ende 20 des Umformabschnittes 19 an die Außenseite 14 des Dämpferrohres 10 angrenzt. Damit ist eine geschlossene Nut 21 gebildet worden, in der das Dichtelement 18 einsitzt. Lediglich zu darstellerischen Zwecken ist das Dichtelement 18 verkleinert gezeigt und füllt die Nut 21 nicht vollständig aus. Verbessernd ist das Dichtelement 18 so dimensioniert, dass dieses nach Umformung des Umformabschnittes 19 die restlich verbleibende Nut 21 vollständig ausfüllt. Insbesondere ist es vorteilhaft, das Ende 20 derart gegen die Außenseite 14 des Dämpferrohres 10 zu verrollen, dass eine gewisse Verpressung des Endes 20 mit dem Dämpferrohr 10 erzeugt wird. Dadurch wird auf besondere Weise eine Spaltbildung vermieden, und Feuchtigkeit, Verunreinigungen und dergleichen können nicht in den Spalt zwischen dem Dämpferrohr 10 und der Verstärkungshülse 15 eindringen. Insbesondere auch kleinere Kavitäten zwischen dem Ende 20 der Verstärkungshülse 15 und der Außenseite 14 des Dämpferrohres 10 können vermieden werden.

Das Umformen des Umformabschnittes 19 mit dem Rollierwerkzeug 24, das auch ein Bördelwerkzeug, ein Abdrückwerkzeug oder dergleichen bildbar ist, wird der Umformabschnitt 19 derart dosiert gegen das Dämpferrohr 10 verrollt, dass eine Veränderung der Innenseite 12 des Dämpferrohres 10 sowohl in Hinsicht der Oberfläche als auch in Hinsicht der geometrischen Ausgestaltung, insbesondere der Maßhaltigkeit, nicht beeinflusst wird.

Figur 4 zeigt in Wiederholung der Merkmale der Figuren 1 und 2 in einer perspektivischen Ansicht das untere Ende des Schwingungsdämpfers 1. Auf der Verstärkungshülse 15 sitzt die Aufnahmegabel 16 zur Anbindung an das Rad des Fahrzeuges auf. Die Aufnahmegabel 16 nimmt dabei Kräfte auf, die in Längsachsenrichtung der Längsachse 13 verlaufen, und um einen Formschluss zwischen der Aufnahmegabel 16 und der Verstärkungshülse 15 zu bilden, weist die Verstärkungshülse 15 eine umlaufende Wulst 26 auf. Die Aufnahmegabel 16 wird auf der Verstärkungshülse 15 unter Aufbringung einer Tangentialspannung aufgeklemmt und stößt in Axialrichtung mit einem kragenförmigen Ende gegen die Wulst 26 an, sodass Kräfte vom Dämpferrohr 10 über die Verstärkungshülse 15 auf die Aufnahmegabel 16 durch einen mit der Wulst 26 gebildeten Formschluss übertragen werden können.

Im Dämpferrohr 10 ist ein Trennkolben 25 angeordnet, welcher einen mit Öl gefüllten Dämpferraum 27 von einem mit Gas gefüllten Ausgleichsraum 28 beweglich trennt. Auch der Trennkolben 25 ist über die Innenseite 12 des Dämpferrohres 10 gleitgeführt. Folglich ist es auch für die Anordnung des Trennkolbens 25 von Bedeutung, dass im Bereich der Anordnung des Dichtelementes 18 im umlaufenden Rand 17 keine Maß- und Oberflächenveränderungen der Innenseite 12 des Dämpferrohres 10 entstehen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehende Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Schwingungsdämpfer
- 10: Dämpferrohr
- 11: Arbeitskolben
- 12: Innenseite
- 13: Längsachse
- 14: Außenseite
- 15: Verstärkungshülse
- 16: Aufnahmegabel
- 17: umlaufender Rand
- 18: Dichtelement
- 19: Umformabschnitt
- 20: Ende
- 21: Nut
- 22: Innenseite
- 23: Kolbenstange
- 24: Rollierwerkzeug
- 25: Trennkolben
- 26: Wulst
- 27: Dämpferraum
- 28: Ausgleichsraum

## Patentansprüche

1. Schwingungsdämpfer (1), insbesondere für ein Fahrwerk eines Fahrzeugs, mit einem Dämpferrohr (10) und mit einem Arbeitskolben (11), der über eine Innenseite (12) des Dämpferrohres (10) in einer Längsachse (13) geführt ist, und wobei auf einer Außenseite (14) des Dämpferrohres (10) eine Verstärkungshülse (15) angeordnet ist, auf der eine Aufnahmegabel (16) zur Fahrwerksanbindung anordbar ist, und wobei die Verstärkungshülse (15) in Längsachsenrichtung mit einem umlaufenden Rand (17) begrenzt ist,
**dadurch gekennzeichnet, dass** im Bereich des umlaufenden Randes (17) ein die Außenseite (14) des Dämpferrohres (10) umschließendes Dichtelement (18) in der Verstärkungshülse (15) aufgenommen ist, wobei der umlaufende Rand (17) einen plastisch verformten Umformabschnitt (19) aufweist, der das Dichtelement (18) umgreift.

2. Schwingungsdämpfer (1) nach Anspruch 1, **dadurch gekennzeichnet, dass** der Umformabschnitt (19) derart umgeformt ist, dass das Ende (20) des Umformabschnittes (19) an der Außenseite (14) des Dämpferrohres (10) anliegend ausgebildet ist.

3. Schwingungsdämpfer (1) nach Anspruch 1 oder 2, **dadurch gekennzeichnet, dass** zur Aufnahme des Dichtelementes (18) im umlaufenden Rand (17) eine Nut (21) eingebracht ist, wobei die Nut (21) in der Innenseite (22) der Verstärkungshülse (15) eingebracht ist.

4. Schwingungsdämpfer (1) nach Anspruch 3, **dadurch gekennzeichnet, dass** die Nut (21) den Umformabschnitt (19) nach innen zum Dämpferrohr (10) hin weisend abschließt.

5. Schwingungsdämpfer (1) nach Anspruch 3 oder 4, **dadurch gekennzeichnet, dass** die Nut (21) derart dimensioniert ist, dass das Dichtelement (18) die Nut (21) nach dem Umformen des Umformabschnittes (19) vollständig ausfüllt.

6. Schwingungsdämpfer (1) nach einem der vorgenannten Ansprüche, **dadurch gekennzeichnet, dass** das Dichtelement (18) durch einen O-Ring gebildet ist.

7. Schwingungsdämpfer (1) nach einem der vorgenannten Ansprüche, **dadurch gekennzeichnet, dass** der Umformabschnitt (19) eine radiale Dicke von 10% bis 50% der Wandstärke der Verstärkungshülse (15) aufweist, und oder dass der Umformabschnitt (19) eine radiale Dicke von 0,5mm bis 1,5mm aufweist.

8. Verfahren zur Anordnung einer Verstärkungshülse (15) auf der Außenseite (14) eines Dämpferrohres (10) eines Schwingungsdämpfers (1), insbesondere für ein Fahrwerk eines Fahrzeugs, wobei sich die Verstärkungshülse (15) über einen Teilabschnitt des Dämpferrohres (10) erstreckt und wobei auf der Außenseite der Verstärkungshülse (15) eine Aufnahmegabel (16) zur Fahrwerksanbindung anordbar ist, und wobei im Dämpferrohr (10) ein Arbeitskolben (11) des Schwingungsdämpfers (1) aufgenommen ist, der über eine Innenseite (12) des Dämpferrohres (10) in einer Längsachse (13) geführt ist, und wobei die Verstärkungshülse (15) in der Längsachse (10) mit einem umlaufenden Rand (17) abschließt, wobei das Verfahren wenigstens die folgenden Schritte aufweist:
- Bereitstellen der Verstärkungshülse (15) mit einer Nut (21) im Bereich des umlaufenden Randes (17), und Bereitstellen des Dämpferrohres (10),
- Anordnen der Verstärkungshülse (15) auf der Außenseite (14) des Dämpferrohres (10),
- Anordnen eines Dichtelementes (18) in der Nut (21) aus der Längsachsenrichtung und,
- plastisches Verformen des umlaufenden Randes (17), derart, dass der Umformabschnittes (19) das Dichtelement (18) umgreift.

9. Verfahren nach Anspruch 8, **dadurch gekennzeichnet, dass** die Umformung des Umformabschnittes (19) mit einem Rollierwerkzeug (24) ausgeführt wird.

10. Verfahren nach Anspruch 8 oder 9, **dadurch gekennzeichnet, dass** der Umformabschnitt (19) so weit umgeformt wird, bis das Ende (20) des Umformabschnittes (19) an der Außenseite (14) des Dämpferrohres (10) anliegend.

## Claims

1. Vibration damper (1), in particular for a chassis of a vehicle, having a damper tube (10) and having a working piston (11) which is guided over an inner side (12) of the damper tube (10) in a longitudinal axis (13), and wherein a reinforcing sleeve (15) is arranged on an outer side (14) of the damper tube (10), on which reinforcing sleeve a receiving fork (16) for attachment to the chassis can be arranged, and wherein the reinforcing sleeve (15) is delimited by a circumferential edge (17) in the longitudinal axis direction,
**characterized in that** a sealing element (18) enclosing the outer side (14) of the damper tube (10) is received in the reinforcing sleeve (15) in the region of the circumferential edge (17), wherein the circumferential edge (17) comprises a plastically deformed deformation portion (19) which engages around the sealing element (18).

2. Vibration damper (1) according to Claim 1,
**characterized in that** the deformation portion (19) is deformed in such a way that the end (20) of the deformation portion (19) is designed to lie against the outer side (14) of the damper tube (10) .

3. Vibration damper (1) according to Claim 1 or 2,
**characterized in that** a groove (21) is incorporated in the circumferential edge (17) in order to receive the sealing element (18), wherein the groove (21) is incorporated in the inner side (22) of the reinforcing sleeve (15).

4. Vibration damper (1) according to Claim 3,
**characterized in that** the groove (21) closes off the deformation portion (19) in an inwardly directed manner towards the damper tube (10).

5. Vibration damper (1) according to Claim 3 or 4,
**characterized in that** the groove (21) is dimensioned in such a way that, after deforming the deformation portion (19), the sealing element (18) completely fills the groove (21).

6. Vibration damper (1) according to one of the preceding claims, **characterized in that** the sealing element (18) is formed by an O-ring.

7. Vibration damper (1) according to one of the preceding claims, **characterized in that** the deformation portion (19) comprises a radial thickness of 10% to 50% of the wall thickness of the reinforcing sleeve (15), and/or **in that** the deformation portion (19) comprises a radial thickness of 0.5 mm to 1.5 mm.

8. Method for arranging a reinforcing sleeve (15) on the outer side (14) of a damper tube (10) of a vibration damper (1), in particular for a chassis of a vehicle, wherein the reinforcing sleeve (15) extends over a subportion of the damper tube (10) and wherein a receiving fork (16) for attachment to the chassis can be arranged on the outer side of the reinforcing sleeve (15), and wherein a working piston (11) of the vibration damper (1) is received in the damper tube (10) and is guided over an inner side (12) of the damper tube (10) in a longitudinal axis (13), and wherein the reinforcing sleeve (15) terminates with a circumferential edge (17) in the longitudinal axis (10), wherein the method comprises at least the following steps:
- providing the reinforcing sleeve (15) having a groove (21) in the region of the circumferential edge (17), and providing the damper tube (10),
- arranging the reinforcing sleeve (15) on the outer side (14) of the damper tube (10),
- arranging a sealing element (18) in the groove (21) from the longitudinal axis direction, and
- plastically deforming the circumferential edge (17) in such a way that the deformation portion (19) engages around the sealing element (18).

9. Method according to Claim 8, **characterized in that** the deformation portion (19) is deformed by a rolling tool (24).

10. Method according to Claim 8 or 9, **characterized in that** the deformation portion (19) is deformed to such an extent until the end (20) of the deformation portion (19) lies against the outer side (14) of the damper tube (10).

## Revendications

1. Amortisseur de vibrations (1), destiné en particulier à un mécanisme de roulement d'un véhicule, l'amortisseur de vibrations comprenant un tube d'amortisseur (10) et un piston de travail (11) qui est guidé sur un côté intérieur (12) du tube d'amortisseur (10) suivant un axe longitudinal (13), et un manchon de renforcement (15) étant disposé sur un côté extérieur (14) du tube d'amortisseur (10), manchon de renforcement sur lequel peut être disposée une fourche de réception (16) destinée à être reliée au mécanisme de roulement, et le manchon de renforcement (15) étant délimité dans la direction de l'axe longitudinal par un bord périphérique (17),
**caractérisé en ce que**, dans la région du bord périphérique (17), un élément d'étanchéité (18) entourant le côté extérieur (14) du tube d'amortisseur (10) est reçu dans le manchon de renforcement (15), le bord périphérique (17) comportant une partie de déformation (19), déformée plastiquement, qui entoure l'élément d'étanchéité (18).

2. Amortisseur de vibrations (1) selon la revendication 1, **caractérisé en ce que** la partie de déformation (19) est déformée de telle sorte que l'extrémité (20) de la partie de déformation (19) est conçue pour venir en appui sur le côté extérieur (14) du tube d'amortisseur (10).

3. Amortisseur de vibrations (1) selon la revendication 1 ou 2, **caractérisé en ce que**, pour recevoir l'élément d'étanchéité (18), une rainure (21) est ménagée dans le bord périphérique (17), la rainure (21) étant ménagée dans le côté intérieur (22) du manchon de renforcement (15) .

4. Amortisseur de vibrations (1) selon la revendication 3, **caractérisé en ce que** la rainure (21) termine la partie de déformation (19) en pointant vers l'intérieur en direction du tube amortisseur (10).

5. Amortisseur de vibrations (1) selon la revendication 3 ou 4, **caractérisé en ce que** la rainure (21) est dimensionnée de telle sorte que l'élément d'étanchéité (18) remplisse complètement la rainure (21) après la déformation de la partie de déformation (19).

6. Amortisseur de vibrations (1) selon l'une des revendications précédentes, **caractérisé en ce que** l'élément d'étanchéité (18) est formé par un joint torique.

7. Amortisseur de vibrations (1) selon l'une des revendications précédentes, **caractérisé en ce que** la partie de déformation (19) a une épaisseur radiale de 10 % à 50 % de l'épaisseur de paroi du manchon de renforcement (15), et/ou **en ce que** la partie de déformation (19) a une épaisseur radiale de 0,5 mm à 1,5 mm.

8. Procédé destiné à disposer un manchon de renforcement (15) sur le côté extérieur (14) d'un tube d'amortisseur (10) d'un amortisseur de vibrations (1), destiné en particulier à un mécanisme de roulement d'un véhicule, le manchon de renforcement (15) s'étendant sur une partie du tube d'amortisseur (10) et une fourchette de réception (16) destinée à être reliée au mécanisme de roulement pouvant être disposée sur le côté extérieur du manchon de renforcement (15), et un piston de travail (11) de l'amortisseur de vibrations (1) étant reçu dans le tube d'amortisseur (10), lequel piston de travail est guidé sur un côté intérieur (12) du tube d'amortisseur (10) suivant un axe longitudinal (13), et le manchon de renforcement (15) se terminant par un bord périphérique (17) dans l'axe longitudinal (10), le procédé comprenant au moins les étapes suivantes :
- produire le manchon de renforcement (15) pourvu d'une rainure (21) dans la région du bord périphérique (17) et produire le tube d'amortisseur (10),
- disposer le manchon de renforcement (15) du côté extérieur (14) du tube d'amortisseur (10),
- disposer un élément d'étanchéité (18) dans la rainure (21) depuis la direction de l'axe longitudinal et,
- déformer plastiquement le bord périphérique (17) de telle que la partie de déformation (19) s'engage autour de l'élément d'étanchéité (18).

9. Procédé selon la revendication 8, **caractérisé en ce que** la déformation de la partie de déformation (19) est effectuée avec un outil de roulage (24).

10. Procédé selon la revendication 8 ou 9, **caractérisé en ce que** la partie de déformation (19) est déformée jusqu'à ce que l'extrémité (20) de la partie de déformation (19) vienne en appui sur le côté extérieur (14) du tube d'amortisseur (10).
